# EUROPEAN PATENT APPLICATION

(11) **EP 2 306 369 A1**
(43) Date of publication of application: **06.04.2011**
(21) Application number: 09797838.1
(22) Date of filing: 06.07.2009
(51) Int. Cl.: G06K 17/00, H01Q 3/24, H04B 5/02

(54) **RFID TAG READ ANTENNA UNIT**

(30) Priority: 14.07.2008 JP 2008182679
(71) Applicant: Sanden Corporation, Isesaki-shi Gunma 372-8502 (JP)
(72) Inventor: SHIMAMOTO Gaku, Isesaki-shi Gunma 372-8502 (JP); KUWAKO Yuuji, Isesaki-shi Gunma 372-8502 (JP); MATSUMOTO Naoto, Isesaki-shi Gunma 372-8502 (JP); TABATA Masaru, Isesaki-shi Gunma 372-8502 (JP); SATOU Masaaki, Isesaki-shi Gunma 372-8502 (JP); KASHIHARA Tatsuki, Isesaki-shi Gunma 372-8502 (JP)
(74) Representative: Haley, Stephen
(86) International application number: PCT/JP2009/062298
(87) International publication number: WO 2010/007912

(57) **Abstract**

An antenna unit includes a plurality of loop antennas; an impedance matching circuits common to the loop antennas; a switching circuit that switches high frequency connection between the impedance matching circuit and the loop antenna; and an antenna control circuit that controls to connect only one sloop antenna among the loop antennas in a high frequency manner on the basis of a control signal from a reader.

## Description

### TECHNICAL FIELD

The present invention relates to an RFID tag reader for reading, in a noncontact manner, a unique identifier preliminarily set in an RFID tag pasted on a distributed commodity in a commodity distribution field and the like, and particularly, to an antenna unit thereof.

### BACKGROUND ART

This type of RFID tag reader (hereinafter, simply referred to as "reader") includes, as essential elements, an antenna for communication with an RFID tag and a high frequency circuit connected to the antenna. These elements employ various implementation modes according to applications of the reader. For example, as described in Patent Document 1, in a case where the purpose is to read an RFID tag pasted on a commodity displayed on a shelf in a store, a thin antenna unit having substantially identical area with that of the shelf is mounted on a top surface or a rear surface of a shelf board. The high frequency circuit is stored in a casing installed at an appropriate position in the shelf. The high frequency circuit and the antenna unit are connected by a coaxial cable having prescribed characteristic impedance. The antenna unit includes a loop antenna element and a matching circuit for impedance matching. Such a reader successively reads unique identifiers of RFID tags on multiple commodities displayed on the shelf, and transmits read data to apparatuses, such as a computer.
PATIENT DOCUMENT 1: Japanese Patent Publication 2001-118037

### DISCLOSURE OF THE INTENTION

### PROBLEMS TO BE SOLVED BY THE INVENTION

In the RAID tag reader as described above, if the antenna unit is enlarged in conformity with the area of a shelf, there is a case where sufficient reading accuracy cannot be attained. In order to solve this problem, a method of arranging a plurality of small loop antenna elements in an antenna unit has been proposed. However, according to such an antenna unit, it is required to provide matching circuits for the respective loop antenna elements. Therefore, it is difficult to downsize the apparatus and reduce the cost.

### MEANS FOR SOLVING THE PROBLEMS

The present invention is made in view of the above situations. It is an object of the present invention to provide an RFID tag read antenna unit suitable for downsizing and reduction in cost.

In order to attain the above object, an antenna unit according to the invention of the present application includes: a plurality of antenna elements; an impedance matching circuit connected to an RFID tag reader; a switching circuit for switching high frequency connection between the impedance matching circuit and each of the antenna elements; and a control circuit for controlling the switching circuit so as to connect only one of the antenna elements selected by a control signal from the RFID tag reader to the impedance matching circuit in a high frequency manner.

The present invention thus includes the plurality of antenna elements in the antenna unit. This realizes what is excellent in the reading range and reading accuracy. Further, the present invention includes the impedance matching circuit common to the antenna elements. This can easily realize downsizing and reduction in cost. Moreover, in the present invention, when one of the antenna elements is conductive to the impedance matching circuit, the other antenna elements are disconnected from the impedance matching circuit with respect to the high frequency connection. This can prevent the electromagnetic field formed by the one of the antenna elements from being coupled to another adjacent antenna element. In general, such coupling narrows the formation range of the electromagnetic field formed by one antenna. Therefore, the present invention can prevent the reading range of the RFID tag from being narrowed.

An example of a preferred mode of the present invention may be a technique wherein the control signal is input into the control circuit via a transmission medium different from that for a high frequency signal for supplying power to each of the antenna elements. According to the present invention, the control signal for selecting the antenna element is transmitted separately from the high frequency signal for reading the RFID tag, thereby allowing secure control.

Another example of a preferred mode of the present invention may be a technique wherein each of the antenna elements includes a loop antenna element arranged in a same plane, and a part of one of the loop antenna elements overlaps with a part of another adjacent loop antenna element. According to the present invention, inside of one of the loop antenna elements there is arranged a coil conductor of another loop antenna element, thereby allowing reading accuracy of the RFID tag to be improved. This is because of the following reason. Provide that the RFID tag exists above one of the loop antenna elements, the directions of magnetic fields formed around the RFID tag by the one of the loop antenna elements and the other loop antenna elements are different from each other. Therefore, reading processes according to different magnetic fields are performed, thereby allowing response probability of the RFID to be improved.

Still another example of a preferred mode of the present invention may be a technique further includes a DOC extracting circuit for extracting a DC component included in a high frequency signal transmitted from the RFID tag reader, wherein the control circuit operates adopting the DC component extracted by the DC extracting circuits as a power source. The present invention negates the need to include a power source, such as a battery, in the antenna unit and to provide a line dedicated to the power source, thereby realizing downsizing.

Yet another example of a preferred mode of the present invention may be a technique wherein the switching circuit turns on and off high frequency connection between both terminals of the antenna element and the impedance matching circuit. According to the present invention, the high frequency connection between the impedance matching circuit and both terminals of the antenna element, instead of one of the terminals thereof, is turned on and off. Therefore, when the connection is turned off, the antenna element is capable of being made to be completely open.

Objects, configurations and advantageous effects other than those described above will be apparent in the following detailed description.

### ADVANTAGES OF THE INVENTION

As described above, the present invention includes the plurality of antenna elements in the antenna unit and thereby is excellent in a reading range and reading accuracy. Further, the present invention includes the impedance matching circuit common to the antenna elements. This can easily realize downsizing and reduction in cost. Moreover, in the present invention, when one of the antenna elements is conductive to the impedance matching circuit, the other antenna elements are disconnected from the impedance matching circuit with respect to high frequency connection. This can prevent an electromagnetic field formed by one of the antenna elements from being coupled with another adjacent antenna element, thereby preventing the reading range of the RFID tag from being narrowed.

### BRIEF DESCRIPTION OF THE DRAWINGS

Figure 1 is a diagram of a configuration of an RFID tag read system;
Figure 2 is a functional diagram of a control unit;
Figure 3 is a functional diagram of an antenna switching unit;
Figure 4 is a top view illustrating an internal configuration of an antenna unit;
Figure 5 is a functional diagram of the antenna unit; and
Figure 6 is a top view illustrating an internal configuration of an antenna unit according to another embodiment.

### BEST MODE FOR CARRYING OUT THE INVENTION

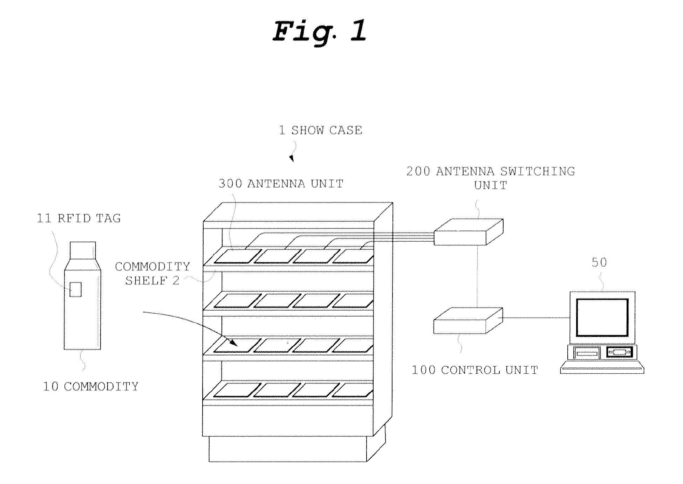

An RFID tag read system including an antenna unit according to an embodiment of the invention of the present application will be described with reference to the drawings. Figure 1 is a diagram of the overall configuration of the RFID tag read system.

The read system according to this embodiment is used for reading a unique identifier of an RFID tag 11 attached on a commodity 10 displayed in a showcase 1, from the RFID tag 11.

As shown in Figure 1, the showcase 1 includes a plurality of commodity shelves 2 for displaying the commodities 10, and a cooling mechanism (not shown) for cooling the commodities 10. The cooling mechanism is similar to the conventionally known ones. Accordingly, a description thereof is omitted. An antenna unit 300 for communication with the RFID tag 11 of the displayed commodity 10 is provided on the top surface of each commodity shelf 2. A plurality (four in Figure 1) of antenna units 300 are arranged on each commodity shelf 2. Further, the showcase 1 includes an antenna switching unit 200 connected to the antenna units 300, and a control unit 100 connected to the antenna switching unit 200 in a one-to-one correspondence. The control unit 100 reads the unique identifier from the RFID tag 11 using the antenna unit 300 connected to the antenna switching unit 200, and transmits a read result to a computer 50 installed in a store. Each antenna unit 300 and the antenna switching unit 200 are connected by a coaxial cable for transmitting a high frequency signal and a signal cable for transmitting a digital control signal. Likewise, the antenna switching unit 200 and the control unit 100 are connected by a coaxial cable and a signal cable.

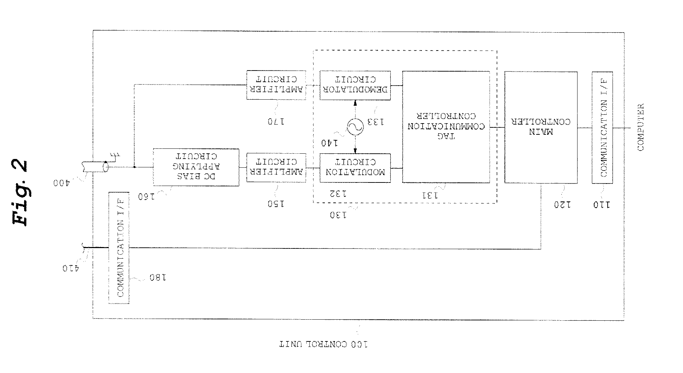

Next, details of the control unit 100 will be described with reference to Figure 2. Figure 2 is a functional diagram of the control unit. As shown in Figure 2, the control unit 100 includes a communication interface 110 for connection with the computer 50, a main controller 120, a tag communication controller 131 that controls communication with the RFID tag 11 according to a prescribed communication protocol, a modulation circuit 132 that modulates an output signal from the tag communication controller 131 into a high frequency signal, an oscillator circuit 140 that generates a carrier wave, an amplification circuit 150 that amplifies the high frequency signal, and a DC bias applying circuit 160 that applies a DC bias to the high frequency signal from the amplification circuit 150. Further, the control unit 100 includes an amplification circuit 170 that amplifies the high frequency signal received from the antenna unit 300, and a demodulation circuit 133 that demodulates the high frequency signal and acquires a communication signal. Moreover, the control unit 100 includes a communication interface 180 for transmitting a control signal to the antenna unit 300. The DC bias applying circuit 160 is connected to the antenna switching unit 200 via the coaxial cable 400. Further, the communication interface 180 is connected to the antenna switching unit 200 via the signal cable 410. The tag communication controller 131, the modulation circuit 132 and the demodulation circuit 133 are implemented in a dedicated communication IC 130.

The main controller 120 transmits the control signal for selecting the antenna unit 300 and a loop antenna element in the antenna unit via the communication interface 180. Additionally the main controller 120 instructs the tag communication controller 131 to read the RFID tag 11 and stores the unique identifier received from the tag communication controller 131 in prescribed storing means (not shown). The main controller 120 repeatedly performs such a read process on the entire antenna units 300 and the loop antenna elements. Further, the main controller 120 replies the unique identifier stored in the storing means to the computer 50 in response to a request by the computer 50.

The tag communication controller 131 communicates with the RFID tag 11 according to a prescribed communication protocol in response to a request by the main controller 120. An output signal from the tag communication controller 131 is ASK-modulated by the modulation circuit 132. The ASK-modulated high frequency signal is amplified by the amplification circuit 150, and applied with a DC bias by the DC bias applying circuit 160. The DC bias is used as power sources in subsequent devices. The high frequency signal received from the antenna unit 300 is amplified by the amplification circuit 170, demodulated by the demodulation circuit 133, and processed by the tag communication controller 131.

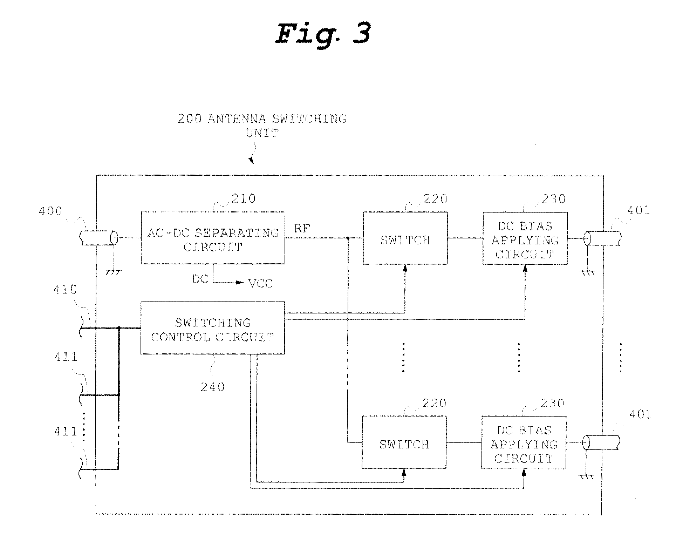

Next, the antenna switching unit 200 will be described with reference to Figure 3. Figure 3 is a functional diagram of the antenna switching unit. As shown in Figure 3, the antenna switching unit 200 connects the plurality of antenna units 300 to one control unit 100, and switches connection between the control unit 100 and the antenna units 300. The antenna switching unit 200 is connected to the control unit 100 by the coaxial cable 400 and the signal cable 410, as described above. Further, the antenna switching unit 200 is connected to each antenna unit 300 via the coaxial cable 401 and the signal cable 411. In this embodiment, a serial bus system is employed as a system for transmitting the control signal. The signal cable 410 and the signal cable 411 are connected with each other via a bus. The antenna switching unit 200 includes an AC-DC separating circuit 210 that separates the high frequency signal input from the control unit 100 via the coaxial cable 400 into an AC component and a DC component, a switch 220 that turns on and off high frequency connection to each antenna unit 300, a DC bias applying circuit 230 that applies a DC bias to the high frequency signal, and a switching control circuit 240 that controls the switch 220 and the DC bias applying circuit 230 on the basis of control signal for selecting the antenna unit 300 received from the control unit 100 via the signal cable 410. The switching control circuit 240 controls so as to make only the switch 220 connected to the selected antenna unit 300 conductive in a high frequency manner but to make the other switches 220 disconnect with respect to the high frequency connection. Further, the switching control circuit 240 causes only the DC bias applying circuit 230 connected to the selected antenna unit 300 to operate, but causes the other DC bias applying circuits 230 not to operate. The direct current separated from the AC-DC separating circuit 210 is supplied as power sources of the switching control circuits 240, the DC bias applying circuit 230 and the like.

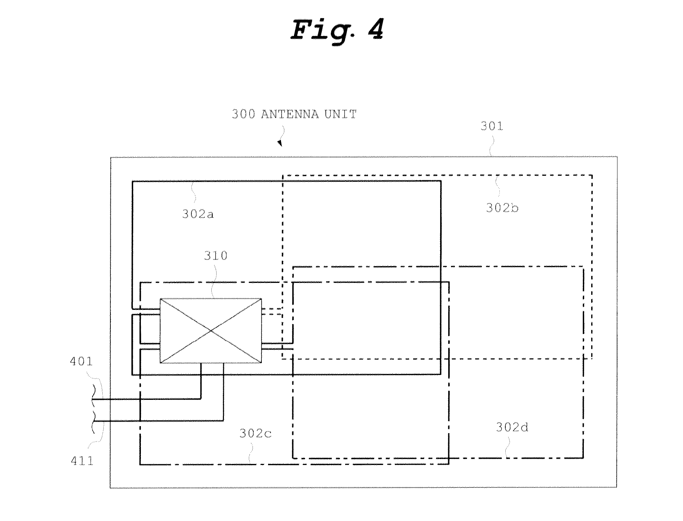

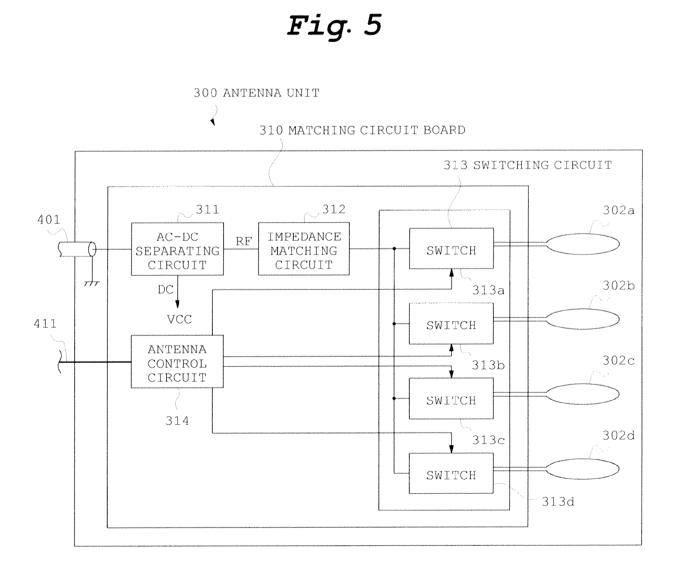

Next, the configuration of the antenna unit 300 will be described with reference to Figures 4 and 5. Figure 4 is a top view illustrating the internal configuration of the antenna unit. Figure 5 is a functional diagram of the antenna unit.

As shown in Figure 4, the antenna unit 300 includes a plurality (four in this embodiment) of loop antennas 302a to 302d which are antenna elements arranged in a casing 301 having a shape like a thin box, and a matching circuit board 310 common to the loop antennas 302a to 302d. In Figure 4, in order to clarify the arrangement of the respective loop antennas 302, a solid line, a broken line, an alternate long and short dash line, and an alternate long and two short dashes line are used. The loop antennas 302a to 302d are made of metal members, for example, such as copper foil or copper wire. The loop antennas 302a to 302d divide the bottom surface of the casing 301 into nine blocks in a matrix manner, and each rectangularly arranged along four-block area, or 2 × 2. Accordingly, as shown in Figure 4, a part of each of the loop antennas 302a to 302d overlaps with a part of another adjacent loop antenna 302a to 302d. In other worlds, at a center part of the loop of one of the loop antennas 302a to 302d there is arranged the wiring of another adjacent loop antenna 302a to 302d.

As shown in Figure 5, the matching circuit board 310 is connected to the antenna switching unit 200 via the coaxial cable 401 and the signal cable 411. The matching circuit board 310 includes an AC-DC separating circuit 311, an impedance matching circuit 312, a switching circuit 313 that switches the loop antennas 302a to 302d, and an antenna control circuit 314 that controls the switching circuit 313.

The AC-DC separating circuit 311 separates the high frequency signal input from the antenna switching unit 200 via the coaxial cable 401 into an AC component and a DC component. The separated DC component is supplied as power sources to the antenna control circuit 314 and the switching circuit 313. In general, the impedance matching circuit 312 subsequent thereto is often connected with a capacitor element in series. Accordingly, it is no problem to input the DC superposed high frequency signal as it is. Therefore, it is sufficient for the AC-DC separating circuit 311 to have at least a function of extracting the DC component included in the high frequency signal.

The switching circuit 313 includes switches 313a to 313d associated with the loop antennas 302a to 302d, respectively. Each of switches 313a to 313d is for turning on and off high frequency connection, and includes a high frequency switching circuit, such as for example a diode switching circuit. The switches 313a to 313d are connected to both terminals of the loop antennas 302a to 302d, respectively. Accordingly, if the switches 313a to 313d are turned off, the loop antennas 302 connected to the switches 313a to 313d is completely disconnected with respect to high frequency connection, in other worlds, becomes an open state. This can prevent the loop antenna 302a to 302d supplied with power from being magnetically coupled with the other loop antennas 302a to 302d, thereby preventing the reading range from being narrowed.

The antenna control circuit 314 controls so as to turn on only the switch 313a to 313d connected with the selected loop antenna 302a to 302d and to turn off the other switches 313a to 313d on the basis of the control signal that is for selecting the loop antenna and input from the control unit 100 via the signal cable 411.

Thus, the RFID tag read system according to this embodiment uses the impedance matching circuit 312 for the plurality of loop antennas 302a to 302d embedded in the antenna unit 300 in a shared manner, thereby realizing downsizing and reduction in cost.

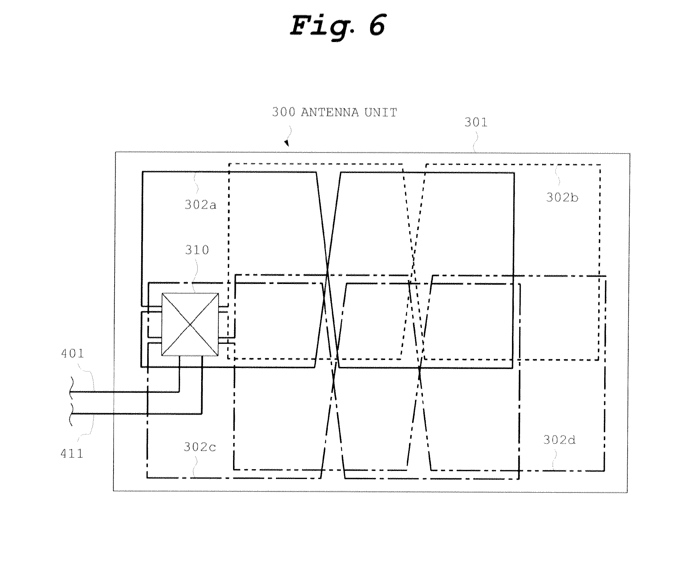

The embodiment of the present invention has thus been described above. However, the present invention is not limited thereto. For example, the structure and arrangement of the loop antennas 302a to 302d may be as shown in Figure 6. The loop antennas 302a to 302d shown in Figure 6 are wound so as to be a "figure-eight" shape forming two small loops by twisting the center thereof by 180 degrees. Accordingly, electromagnetic fields formed by the respective small loops when the loop antenna 302a to 302d is supplied with power are oriented inversely to each other. Further, a part of each of the loop antennas 302a to 302d are arranged so as to overlap with a part of another adjacent loop antenna 302a to 302d. More specifically, inside of the small loop of one of the loop antennas 302a to 302d there is arranged wiring of another loop antenna 302a to 302d.

In the above embodiment, the power source for the antenna unit 300 is superposed on the high frequency signal. However, a battery or the like may separately be embedded in the antenna unit 300, the signal cable may include a power source line, or the power source may be supplied via a cable dedicated for the powder source.

### DESCRIPTION OF SYMBOLS

10 ... commodity, 11 ... RFID tag, 50 ... computer, 100 ... control unit, 120 ... main controller, 131 ... tag communication controller, 132 ... modulation circuit, 133 ... demodulation circuit, 150 and 170 ... amplification circuit, 160 ... DC bias applying circuit, 200 ... antenna switching unit, 210 ... AC-DC separating circuit, 220 ... switch, 230 ... DC bias applying circuit, 240 ... switching control circuit, 300 ... antenna unit, 301 ... casing, 302a to 302d ... loop antenna, 310 ... marching circuit board, 311 ... AC-DC separating circuit, 312 ... impedance matching circuit, 313 ... switching circuit, 313a to 313d ... switch, 314 ... antenna control circuit

## Claims

1. An antenna unit for reading RFID tag, comprising:
a plurality of antenna elements;
an impendance matching circuit connected to an RFID tag reader;
a switching circuit for switching high frequency connection between the impedance matching circuit and each of the antenna elements; and
a control circuit for controlling the switching circuit so as to connect only one of the antenna elements selected by a control signal from the RFID tag reader to the impedance matching circuit in a high frequency manner.

2. The antenna unit for reading RFID tag according to claim 1,
wherein the control signal is input into the control circuit via a transmission medium different from a transmission medium for a high frequency signal for supplying power to each of the antenna elements.

3. The antenna unit for reading RFID tag according to claim 1,
wherein each of the antenna elements comprises a loop antenna element arranged in a same plane, and a part of one of the loop antenna elements overlaps with a part of another adjacent loop antenna element.

4. The antenna unit for reading RFID tag according to claim 1,
further comprising a DC extracting circuit for extracting a DC component included in a high frequency signal transmitted from the RFID tag reader,
wherein the control circuit operates adopting the DC component extracted by the DC extracting circuit as a power source.

5. The antenna unit for reading RFID tag according to claim 1,
wherein the switching circuit turns on and off high frequency connection between both terminals of the antenna element and the impedance matching circuit.
